(19)

**Europäisches Patentamt**
**European Patent Office**
**Office européen des brevets**

(11) **EP 4 624 326 A1**

(12) **EUROPEAN PATENT APPLICATION**

(43) Date of publication:
**01.10.2025** Bulletin **2025/40**

(21) Application number: **24305476.4**

(22) Date of filing: **28.03.2024**

(51) International Patent Classification (IPC):
**B64C 13/04** (2006.01) **B64C 13/10** (2006.01)
**B64C 13/50** (2006.01) **G05G 9/047** (2006.01)

(52) Cooperative Patent Classification (CPC):
**B64C 13/0421; B64C 13/10; B64C 13/507;**
G05G 2009/04766

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Ratier-Figeac SAS**
**46101 Figeac Cedex (FR)**

(72) Inventor: **Antraygue, Cedric**
**46101 Figeac Cedex (FR)**

(74) Representative: **Dehns**
**10 Old Bailey**
**London EC4M 7NG (GB)**

(54) **CONTROL SYSTEM**

(57)     A control system for an aircraft, the control system comprising: an inceptor operable by a pilot; an actuator configured to generate a force on the inceptor; a first sensor configured to measure an acceleration of the control system; and a control unit configured to: determine an acceleration force on the inceptor based on the measured acceleration; and modify the force generated by the actuator based on the acceleration force.

Figure 1a

Figure 1b

Figure 1c

Figure 1d

EP 4 624 326 A1

**Description**

This disclosure relates to a control system.

BACKGROUND

Control systems for aircraft include inceptors that allow a pilot to manually take control of the aircraft. However, during flight, inceptors are subject to acceleration forces that may inconvenience the pilot when performing a control operation or provide erroneous movement of the inceptors when the pilot is not interacting with the inceptors.

Typically, acceleration forces on inceptors are compensated using a counterweight. However, this results in complicated control systems that are bulky and expensive. It is therefore desired to provide an improved control system.

SUMMARY

According to a first aspect, there is provided a control system for an aircraft, the control system comprising: an inceptor operable by a pilot; an actuator configured to generate a force on the inceptor; a first sensor configured to measure an acceleration of the control system; and a control unit configured to: determine an acceleration force on the inceptor based on the measured acceleration; and modify the force generated by the actuator based on the acceleration force.

The first sensor may be an accelerometer.

The force generated by the actuator may include a feel force. The force generated by the actuator may include a command force.

The control system may comprise a second sensor configured to measure a total force on the inceptor. The total force may include the acceleration force, and optionally a user force that is applied to the inceptor by a pilot.

The control unit may be configured to modify the force generated by the actuator based on the total force.

The control unit may be configured to modify the force generated by the actuator based on a difference between the total force and the acceleration force.

The control unit may be configured to determine an operation force on the inceptor by subtracting the acceleration force from the total force.

The control unit may be configured to filter the operation force to remove noise.

The control unit may be configured to determine a corrected operation force by summing the filtered operation force for the inceptor with a filtered operation force for a further inceptor.

The control system may comprise a third sensor configured to measure a position of the inceptor.

The control unit may be configured to determine the acceleration force based on the measured inceptor position.

The control unit may be configured to modify the force generated by the actuator based on the measured inceptor position.

The control unit may be configured to filter the acceleration force to remove noise.

The control unit may be configured to modify the force generated by the actuator by modifying a current through the actuator.

The control unit may be configured to modify the current based on the total force and the measured inceptor position.

The control unit may be configured to determine a desired current.

The control unit may be configured to modify the current based on the acceleration force.

The control unit may be configured to determine a correction current based on the acceleration force.

The control unit may be configured to modify a current through the actuator by summing the desired current and the correction current, and then subtracting a measured actuator current.

The modified force may counteract the acceleration force on the inceptor.

The modified force may include a feel force. The modified force may include a command force.

The first sensor may be located within the inceptor or external to the inceptor. For example, the first sensor may be located below the inceptor.

According to a second aspect, there is provided an aircraft comprising the control system as described above.

According to a third aspect, there is provided a method of operating a control system for an aircraft, the control system comprising an inceptor operable by a pilot; an actuator configured to generate a feel force on the inceptor, and a first sensor configured to measure an acceleration of the control system, the method comprising: determining an acceleration force on the inceptor based on the measured acceleration; and modifying the feel force based on the acceleration force.

Embodiments will be further described and explained by way of example with reference to the accompanying drawings in which

Figure 1a shows a schematic of a control system;

Figure 1b shows a schematic of a control system;
Figure 1c shows a schematic of a control system;
Figure 1d shows a schematic of a control system;
Figure 2a shows a schematic of an inceptor;
Figure 2b shows a schematic of an inceptor;
Figure 2c shows a schematic of an inceptor;
Figure 3 shows a force servo loop for a control system; and
Figure 4 shows a position servo loop for a control system.

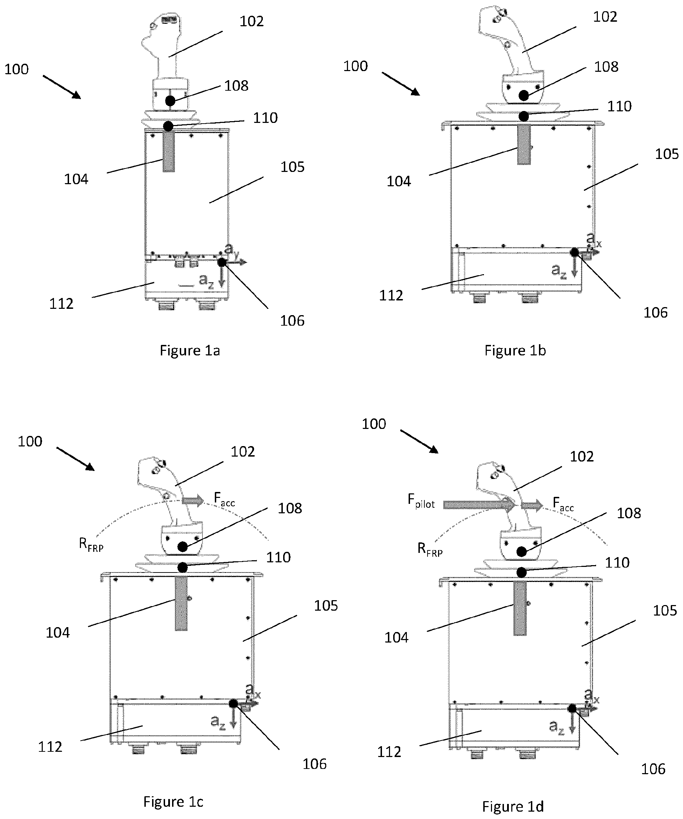

With reference to Figures 1a-1b, a control system 100 comprises an inceptor 102, an inceptor base 105, an actuator 104, and a first sensor 106. The inceptor 102 may be a movable part that a pilot can physically interact with. For example, the inceptor 102 may be a hand-held grip that allows a pilot to control an aircraft, and in particular, control a rudder, elevator, or ailerons of the aircraft. Although illustrated as a hand-held grip, the inceptor 102 may instead be a pedal, lever, wheel or any other control component for use by a pilot. The inceptor base 105, on the other hand, may be a fixed part connected to the inceptor 102.

The actuator 104 is configured to generate a force on the inceptor 102. When the control system 100 is operated manually by a pilot, this force includes a feel force that simulates the forces of a mechanically controlled aircraft. In these embodiments, the actuator 104 generates the (feel) force in response to movement of the inceptor 102 from a neutral position. For example, the actuator 104 may generate a (feel) force that opposes the force applied to the inceptor 102 by the pilot. The (feel) force generated by the actuator 104 may be determined based on the amplitude of the force applied by the pilot and/or on the position of the inceptor 102 relative to the neutral position.

In the case of auto-pilot operation of the control system 100, the force generated by the actuator 104 includes a command force that moves the inceptor 102 from the neutral position to a desired position.

The inceptor 102 may be at the neutral position when no control is required or desired. The (feel or command) force generated by the actuator 104 may be zero when the inceptor 102 is at the neutral position. The actuator 104 may be a motor.

The first sensor 106 is configured to measure an acceleration of the control system 100. This acceleration may be the acceleration that is caused by forces other than those from the pilot or auto-pilot. For example, the acceleration measured by the first sensor 106 may be an acceleration of the control system 100 that is caused by altitude changes, aircraft attitude changes, turbulence, aircraft flexible modes and/or high acceleration of the aircraft. The acceleration of the control system 100 may be measured in one dimension, two dimensions, or three dimensions.

The first sensor 106 may be an accelerometer. It will be understood that any type of accelerometer will be suitable for use in the control system 100. For example, the first sensor 106 may be a MEMS accelerometer. Alternatively, the first sensor 106 may be a piezoelectric accelerometer. As illustrated, the first sensor 106 may be located below the inceptor 102 and integrated with the inceptor base 105. Alternatively, the first sensor 106 may be located externally to the inceptor base 105. For example, the first sensor 106 may be an existing aircraft sensor configured to measure an acceleration of a cockpit. In any case, the first sensor 106 is fixed relative to the aircraft.

The control system also comprises a second sensor 108 that measures the total force on the inceptor 102. The second sensor 108 is preferably a bending force sensor (e.g. a strain gauge force sensor) located directly below the inceptor 102. However, in other embodiments, the second sensor 108 may be a torque sensor, a load sensor, or a shear force sensor. The second sensor 108 may also be located deeper in the kinematic chain (i.e. further from the inceptor 102 and closer to the actuator 104).

The total force on the inceptor 102 that the second sensor 108 measures is the amount of force applied on the components located above the second sensor 108. For example, in an auto-pilot operation of the control system 100, or in the case of manual operation by a pilot when the pilot is not touching the inceptor 102, the total force measured by the second sensor 108 on the inceptor 102 comprises an acceleration force applied on the components located above the second sensor 108 (see Figure 1c). When the control system 100 is operated manually by a pilot (and the pilot is touching the inceptor 102), the total force measured by the second sensor 108 on the inceptor 102 includes the force exerted by the pilot on the inceptor 102 and the acceleration force applied to the components located above the second sensor 108 (see Figure 1d).

The control system 100 further comprises a third sensor 110 that measures the position of the inceptor 102.

When the control system 100 is operated manually by a pilot (and the pilot is touching the inceptor 102), the acceleration of the control system 100 described above may act in the direction that the pilot moves the inceptor 102 or in the opposite direction. This may inconvenience the pilot in the case that the acceleration acts in the opposite direction as it would be more difficult to move the inceptor 102 in a desired direction and therefore more difficult to perform a desired control operation. In the opposite scenario, when the acceleration acts in the same direction, it would be easier for the pilot to move the inceptor 102 in the desired direction and therefore easier to perform a desired control operation, which may cause the pilot to overperform the operation.

It will be appreciated that similar problems arise when the inceptor 102 should be stationary either when no control is required or desired by the pilot operating the control system 100 manually (i.e. when the pilot is not touching the inceptor 102) or when the control system 100 is operated in an auto-pilot mode. In this case, acceleration of the control system 100 may cause erroneous movement of the inceptor 102 and therefore an undesired control operation.

To account for this, the control system 100 comprises a control unit 112 that determines an acceleration force on the inceptor 102 based on the measured acceleration and, optionally, based on the measured inceptor position.

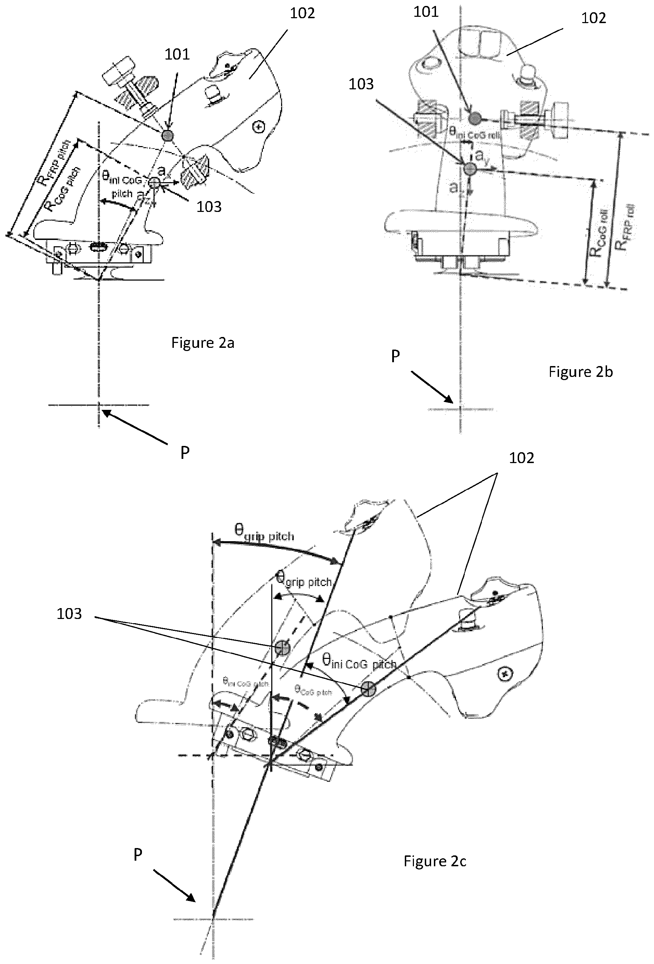

With reference to Figures 2a-2c, the acceleration force (that is included in the total force measured by the second sensor 108) can be computed as:

$$\begin{bmatrix} F_{pitch} \\ F_{roll} \end{bmatrix} = \begin{bmatrix} \dfrac{1}{R_{FRP\ pitch}} & \dfrac{1}{R_{FRP\ roll}} \end{bmatrix} \begin{bmatrix} T_{pitch} \\ T_{roll} \end{bmatrix} \tag{1}$$

where $F_{pitch}$ is a component of the acceleration force that is included in the total force measured by the second sensor 108 and which affects the pitch of the inceptor 102, $F_{roll}$ is a component of the acceleration force that is included in the total force measured by the second sensor 108 and which affects the roll of the inceptor 102, $T_{pitch}$ is a component of an acceleration torque on the inceptor 102 due to the acceleration force included in the total force measured by the second sensor 108 and which affects the pitch of the inceptor 102, and $T_{roll}$ is a component of the acceleration torque on the inceptor 102 due to the acceleration force included in the total force measured by the second sensor 108 and which affects the roll of the inceptor 102. The term FRP refers to the finger reference point 101, i.e. the location on the inceptor 102 where the pilot's fingers grip the inceptor 102. $R_{FRP\ pitch}$ is the distance between the centre of the bending zone of the second sensor 108 and the FRP 101 when the inceptor 102 is pitching, and $R_{FRP\ roll}$ is the distance between the centre of the bending zone of the second sensor 108 and the FRP 101 when the inceptor 102 is rolling.

The components of the acceleration torque can be computed as:

$$\begin{bmatrix} T_{pitch} \\ T_{roll} \end{bmatrix} = M \begin{bmatrix} BL_x & 0 & BL_{zp} \\ 0 & BL_y & BL_{zr} \end{bmatrix} \begin{bmatrix} a_x \\ a_y \\ a_z \end{bmatrix} \tag{2}$$

using:

$$BL_x = R_{CoG\ pitch} \cos\left(\theta ini_{CoG\ pitch} + \theta_{grip\ pitch}\right) \tag{3}$$

$$BL_{zp} = R_{CoG\ pitch} \sin\left(\theta ini_{CoG\ pitch} + \theta_{grip\ pitch}\right) \tag{4}$$

$$BL_y = R_{CoG\ roll} \cos\left(\theta ini_{CoG\ roll} + \theta_{grip\ roll}\right) \tag{5}$$

$$BL_{zr} = R_{CoG\ roll} \cos\left(\theta ini_{CoG\ roll} + \theta_{grip\ roll}\right) \tag{6}$$

where M is the mass of the inceptor 102, $a_x$ is the acceleration of the inceptor 102 in the x-direction, $a_y$ is the acceleration of the inceptor 102 in the y-direction, and $a_z$ is the acceleration of the inceptor 102 in the z-direction. The term CoG here refers to the centre of gravity 103 of the inceptor 102. $R_{COG\ pitch}$ is the distance between the centre of the bending zone of the second sensor 108 and the COG 103 when the inceptor 102 is pitching, and $R_{COG\ roll}$ is the distance between the centre of the bending zone of the second sensor 108 and the COG 103 when the inceptor 102 is rolling. $\theta ini_{COG\ pitch}$ is the angle, in the pitch plane (xz), between a vertical line passing through the centre of the bending zone of the second sensor 108 and a line from the centre of the bending zone of the second sensor 108 through COG 103 when the inceptor 102 is pitching, and $\theta ini_{COG\ roll}$ is the angle, in the roll plane (yz), between a vertical line passing through the centre of the bending zone of the second sensor 108 and a line from the centre of the bending zone of the second sensor 108 through the COG 103 when the inceptor 102 is rolling. $\theta_{grip\ pitch}$ is the grip pitch rotation angle relative to a pivot point (P), and can be defined as the angle, in the pitch plane (xz), between a vertical line passing through the pivot point (P) and a line from the pivot point (P) to the centre of the bending zone of the second sensor 108 when the inceptor 102 is pitching. $\theta_{grip\ roll}$ is the grip roll rotation angle relative to the pivot point (P), and can be defined as the angle, in the roll plane (yz), between a vertical line passing through the pivot point (P) and a line from the pivot point (P) to the centre of the bending zone of the second sensor 108 when the inceptor 102 is rolling.

Although $\theta_{grip\ roll}$ is not illustrated, it will be appreciated that this can be readily extrapolated from the example provided.

In alternative embodiments, the first sensor 106 may be located within the inceptor 102, that is to say moveable therewith, rather than below the inceptor 102. In this case, the computation of the acceleration force does not need to consider the deflection of the inceptor 102 and equations (3) to (6) become:

$$BL_x = R_{COG\ pitch} \cos\left(\theta ini_{COG\ pitch}\right) \tag{7}$$

$$BL_{zp} = R_{COG\ pitch} \sin\left(\theta ini_{COG\ pitch}\right) \tag{8}$$

$$BL_y = R_{COG\ roll} \cos\left(\theta ini_{COG\ roll}\right) \tag{9}$$

$$BL_{zr} = R_{COG\ roll} \cos\left(\theta ini_{COG\ roll}\right) \tag{10}$$

The above computation can be used in both auto-pilot operation of the control system 100 and manual operation by a pilot. In this latter case, M may optionally be amended to include an estimate of the mass of the pilot's hand or arm in order to prevent aircraft pilot coupling (i.e. inadvertent pilot input due to aircraft acceleration).

Equations (1) to (10) are for a control system comprising a two-axis rotary inceptor with a bending force sensor located below and adjacent to the inceptor. However, these equations can be extrapolated to other types of inceptors having more or less axes (e.g. a three-axis inceptor having a twist axis) or to other types of inceptor kinematics (e.g. linear inceptors). The equations may also be extrapolated to other types of sensors (e.g. a shear force sensor) or to other kinematic locations of the sensor (e.g. closer to the actuator 104 than the inceptor 102).

It will be appreciated that the above is only an example of computing the acceleration force. Any known method of determining the acceleration force would be suitable.

Once the acceleration force is determined, the control unit 112 modifies the force generated by the actuator 104 based on the acceleration force. That is the control unit 112 may modify the generated force by modifying the current through the actuator 104 to compensate for the acceleration force on the inceptor 102.

A more detailed description will now be provided.

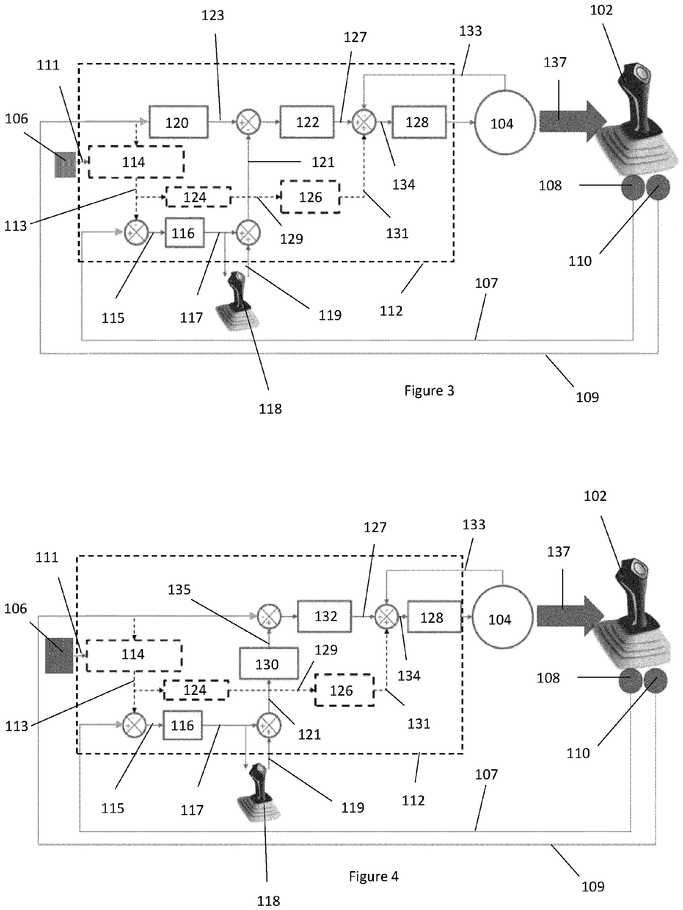

With reference to Figure 3, the control unit 112 comprises an acceleration force calculation unit 114 that receives an acceleration 111 measured by the first sensor 106 and an inceptor position 109 measured by the third sensor 110. Using the measured acceleration 111 and the measured inceptor position 109, the acceleration force calculation unit 114 calculates an acceleration force 113 acting on the inceptor 102 as described above. The calculated acceleration force 113 is then combined with the total force 107 acting on the inceptor 102, as measured by the second sensor 108. In the case of manual operation by a pilot, the total force 107 includes the acceleration force 113 acting on the inceptor 102 and a user force applied to the inceptor 102 by the pilot. For auto-pilot operation (or manual operation in which control is not desired or required, i.e. when the pilot does not touch the inceptor 102), the total force includes only the acceleration force 113 acting on the inceptor 102.

The calculated acceleration force 113 is combined with the total force 107 to provide an operation force 115 on the inceptor 102 by subtracting the calculated acceleration force 113 from the total force 107. In this way, the contribution to the forces acting on the inceptor 102 by the acceleration of the inceptor 102 is removed. In manual operation, the operation force 115 includes only the user force applied to the inceptor 102 by the pilot. For auto-pilot operation (or manual operation in which control is not desired or required, i.e. when the pilot does not touch the inceptor 102), the operation force 115 is zero.

The operation force 115 is transmitted to a first filter 116 to provide a filtered operation force 117 that is corrected for noise and the filtered operation force 117 is transmitted to a further inceptor 118. The further inceptor 118 transmits back a filtered operation force 119 for the further inceptor 118 which is combined with the filtered operation force 117 from the inceptor 102. That is, the filtered operation forces 117, 119 are summed together to provide a corrected operation force 121. This is necessary when cross cockpit coupling is required, i.e. when there are two inceptors 102, 118, one for a pilot and one for a co-pilot. The control system 100 may also comprise a single inceptor 102, that is to say without the further inceptor 118. In this case, the corrected operation force 121 will be the filtered operation force 117.

It will be appreciated that in manual operation, the corrected operation force 121 is non-zero, while in auto-pilot operation (or manual operation in which control is not desired or required, i.e. when the pilot does not touch the inceptor 102), the corrected operation force 121 is zero.

The measured inceptor position 109 is transmitted to a force calculation unit 120 whose output 123 is combined with the corrected operation force 121 by subtracting the corrected operation force 121 from the output 123. The result is then transmitted to a force controller 122 that determines a desired current 127 for the actuator 104.

The acceleration force 113 is transmitted to a second filter 124 to provide a filtered acceleration force 129 that is corrected for noise and the filtered acceleration force 129 is transmitted to a current calculation unit 126. The current calculation unit 126 determines a correction current 131 for the actuator 104 based on the filtered acceleration force 129. The correction current 131 is the current that can be applied to the actuator 104 to counteract the acceleration force 113 on the inceptor 102.

It will be appreciated that these steps could be performed by the force controller 122. However, the bandwidth of the force controller 122 is lower than 20 Hz in most cases. As such, when the acceleration on the inceptor 102 is large, e.g. during turbulence, the efficiency of the force controller 122 reduces significantly. In contrast to the force controller 122, the second filter 124 and the current calculation unit 126 are operated at a frequency higher than 20 Hz.

The desired current 127 from the force controller 122, the correction current 131 from the current calculation unit 126, and a measured current 133 from the actuator 104 are combined to provide an operation current 134 that is transmitted to a current controller 128. That is, the operation current 134 is determined by summing the desired current 127 and the correction current 131, and then subtracting the measured current 133. The current controller 128 then applies the operation current 138 to the actuator 104 to generate a modified force on the inceptor 102.

An alternative control unit 112 will now be described.

With reference to Figure 4, the control unit 112 comprises an acceleration force calculation unit 114 that receives an acceleration 111 measured by the first sensor 106 and an inceptor position 109 measured by the third sensor 110. Using the measured acceleration 111 and the measured inceptor position 109, the acceleration force calculation unit 114 calculates an acceleration force 113 acting on the inceptor 102 as described above. The calculated acceleration force 113 is then combined with the total force 107 acting on the inceptor 102, as measured by the second sensor 108. In the case of manual operation by a pilot, the total force 107 includes the acceleration force 113 acting on the inceptor 102 and a user force applied to the inceptor 102 by the pilot. For auto-pilot operation (or manual operation in which control is not desired or required, i.e. when the pilot does not touch the inceptor 102), the total force includes only the acceleration force 113 acting on the inceptor 102.

The calculated acceleration force 113 is combined with the total force 107 to provide an operation force 115 on the inceptor 102 by subtracting the calculated acceleration force 113 from the total force 107. In this way, the contribution to the forces acting on the inceptor 102 by the acceleration of the inceptor 102 is removed. In manual operation, the operation force 115 includes only the user force applied to the inceptor 102 by the pilot. For auto-pilot operation (or manual operation in which control is not desired or required, i.e. when the pilot does not touch the inceptor 102), the operation force 115 is zero.

The operation force 115 is transmitted to a first filter 116 to provide a filtered operation force 117 that is corrected for noise and the filtered operation force 117 is transmitted to a further inceptor 118. The further inceptor 118 transmits back a filtered operation force 119 for the further inceptor 118 which is combined with the filtered operation force 117 from the inceptor 102. That is, the filtered operation forces 117, 119 are summed together to provide a corrected operation force 121. As described above, this is necessary when cross cockpit coupling is required, i.e. when there are two inceptors, one for a pilot and one for a co-pilot. In this case, the corrected operation force 121 is the filtered operation force 117.

It will be appreciated that in manual operation, the corrected operation force 121 is non-zero, while in auto-pilot operation (or manual operation in which control is not desired or required, i.e. when the pilot does not touch the inceptor 102), the corrected operation force 121 is zero.

The corrected operation force 121 is transmitted to a position calculation unit 130 whose output 135 is combined with the measured inceptor position 109 by subtracting the measured inceptor position 109 from the output 135. The result is then transmitted to a position controller 132 that determines a desired current 127 for the actuator 104.

The acceleration force 113 is transmitted to a second filter 124 to provide a filtered acceleration force 129 that is corrected for noise and the filtered acceleration force 129 is transmitted to a current calculation unit 126. The current calculation unit 126 determines a correction current 131 for the actuator 104 based on the filtered acceleration force 129. The correction current 131 is the current that can be applied to the actuator 104 to counteract the acceleration force 113 on the inceptor 102.

It will be appreciated that these steps could be performed by the position controller 132. However, the bandwidth of the position controller 132 is lower than 20 Hz in most cases. As such, when the acceleration on the inceptor 102 is large, e.g. during turbulence, the efficiency of the position controller 132 reduces significantly. In contrast to the position controller 132, the second filter 124 and the current calculation unit 126 are operated at a frequency higher than 20 Hz.

The desired current 127 from the position controller 132, the correction current 131 from the current calculation unit 126, and a measured current 133 from the actuator 104 are combined to provide an operation current 134 that is transmitted to a current controller 128. That is, the operation current 134 is determined by summing the desired current 127 and the correction current 131, and then subtracting the measured current 133. The current controller 128 then applies the operation current 134 to the actuator 104 to generate a modified force on the inceptor 102.

Various aspects of the inceptor disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

**Claims**

1.   A control system for an aircraft, the control system comprising:

an inceptor operable by a pilot;
an actuator configured to generate a force on the inceptor;
a first sensor configured to measure an acceleration of the control system; and
a control unit configured to:

determine an acceleration force on the inceptor based on the measured acceleration; and
modify the force generated by the actuator based on the acceleration force.

2.   A control system as claimed in claim 1, wherein the first sensor is an accelerometer.

3.   A control system as claimed in claims 1 or 2, comprising a second sensor configured to measure a total force on the inceptor.

4.   A control system as claimed in claim 3, wherein the control unit is configured to modify the force generated by the actuator based on the total force.

5.   A control system as claimed in claims 3 or 4, wherein the control unit is configured to modify the force generated by the actuator based on a difference between the total force and the acceleration force.

6.   A control system as claimed in any of claims 3-5, comprising a third sensor configured to measure a position of the inceptor.

7.   A control system as claimed in claim 6, wherein the control unit is configured to determine the acceleration force based on the measured inceptor position.

8.   A control system as claimed in claims 6 or 7, wherein the control unit is configured to modify the force generated by the actuator based on the measured inceptor position.

9.   A control system as claimed in any of claims 6-8, wherein the control unit is configured to modify the force generated by the actuator by modifying a current through the actuator.

10.   A control system as claimed in claim 9, wherein the control unit is configured to modify the current based on the acceleration force.

11.   A control system as claimed in any preceding claim, wherein the modified force counteracts the acceleration force on the inceptor.

12.   A control system as claimed in any preceding claim, wherein the first sensor is located within the inceptor.

13.   A control system as claimed in any of claims 1-11 wherein the first sensor is located externally to the inceptor.

14.   An aircraft comprising the control system of any preceding claim.

15.   A method of operating a control system for an aircraft, the control system comprising an inceptor operable by a pilot; an actuator configured to generate a force on the inceptor, and a first sensor configured to measure an acceleration of the control system, the method comprising:

determining an acceleration force on the inceptor based on the measured acceleration; and
modifying the force generated by the actuator based on the acceleration force.

Figure 1a

Figure 1b

Figure 1c

Figure 1d

Figure 2a

Figure 2b

Figure 2c

Figure 3

Figure 4

11

**EUROPEAN SEARCH REPORT**

Europäisches Patentamt
European Patent Office
Office européen des brevets

Application Number

EP 24 30 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/244754 A1 (BEAN JASON HOWARD [GB] ET AL) 4 August 2022 (2022-08-04)<br>* the whole document * | 1-15 | INV.<br>B64C13/04<br>B64C13/10<br>B64C13/50<br>G05G9/047 |
| X | US 2016/004270 A1 (TAYLOR ADAM [GB] ET AL) 7 January 2016 (2016-01-07)<br><br>* abstract; figure 1 *<br>* paragraphs [0024] - [0026] * | 1-6,<br>8-11,<br>13-15 | |
| X | US 2011/284696 A1 (STIEFENHOFER MATTHIAS [DE] ET AL) 24 November 2011 (2011-11-24)<br>* abstract; figure 1 *<br>* paragraphs [0026] - [0031] * | 1-6,8-15 | |
| A | US 4 477 043 A (REPPERGER DANIEL W [US]) 16 October 1984 (1984-10-16)<br>* abstract; figure 2 * | 1-15 | |

TECHNICAL FIELDS
SEARCHED        (IPC)

B64C
G05G

The present search report has been drawn up for all claims

| Place of search | Date of completion of the search | Examiner |
|---|---|---|
| Munich | 30 August 2024 | Cesaro, Ennio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 624 326 A1**

## ANNEX TO THE EUROPEAN SEARCH REPORT
## ON EUROPEAN PATENT APPLICATION NO.

EP 24 30 5476

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | Publication date |
|---|---|---|---|
| US 2022244754 A1 | 04-08-2022 | EP 3997551 A1 | 18-05-2022 |
| | | GB 2587468 A | 31-03-2021 |
| | | TW 202109250 A | 01-03-2021 |
| | | US 2022244754 A1 | 04-08-2022 |
| | | WO 2021005328 A1 | 14-01-2021 |
| US 2016004270 A1 | 07-01-2016 | EP 2935000 A1 | 28-10-2015 |
| | | ES 2739392 T3 | 30-01-2020 |
| | | US 2016004270 A1 | 07-01-2016 |
| | | WO 2014096773 A1 | 26-06-2014 |
| US 2011284696 A1 | 24-11-2011 | DE 102010022200 A1 | 24-11-2011 |
| | | FR 2960213 A1 | 25-11-2011 |
| | | RU 2011120142 A | 27-11-2012 |
| | | US 2011284696 A1 | 24-11-2011 |
| US 4477043 A | 16-10-1984 | NONE | |